# EUROPEAN PATENT APPLICATION

(11) **EP 4 485 556 A1**
(43) Date of publication of application: **01.01.2025**
(21) Application number: 24179460.1
(22) Date of filing: 03.06.2024
(51) Int. Cl.: H01M 4/04, H01M 4/13, H01M 10/052

(54) **ELECTRODE FOR RECHARGEABLE LITHIUM BATTERY AND RECHARGEABLE LITHIUM BATTERY INCLUDING SAME**

(30) Priority: 30.06.2023 KR 20230085351
(71) Applicant: Samsung SDI Co., Ltd., Yongin-si, Gyeonggi-do 17084 (KR)
(72) Inventor: Jung, Injoe, 17084 Gyeonggi-do (KR); Kimura, Fumiko, 17084 Gyeonggi-do (KR); Kim, Yeongap, 17084 Gyeonggi-do (KR); Jeon, Seongho, 17084 Gyeonggi-do (KR)
(74) Representative: Michalski Hüttermann & Partner Patentanwälte mbB

(57) **Abstract**

An electrode for a rechargeable lithium battery and a rechargeable lithium battery including the same are provided. The electrode includes an active material layer including an active material and having a first hole and a second hole, the second hole having a depth greater than a depth of the first hole, wherein a ratio of the depth of the first hole to (:) the depth of the second hole is about 1 : 2 to about 1 : 5.

## Description

### BACKGROUND

### 1. Field

Embodiments of the present disclosure relate to an electrode for a rechargeable lithium battery and a rechargeable lithium battery including the same.

### 2. Description of the Related Art

Rechargeable lithium batteries are batteries exhibiting excellent or suitable discharge voltage and relatively high energy density.

Such a battery includes a positive electrode, a negative electrode, and an electrolyte, and the electrode, such as the positive electrode and the negative electrode, may each include a current collector and an active material layer on the current collector.

### SUMMARY

Aspects of one or more embodiments relate to an electrode for a rechargeable lithium battery exhibiting improved high power and fast charge characteristics by improving electrolyte immersion ability and lithium ion mobility.

Aspects of one or more embodiments relate to a rechargeable lithium battery including the electrode.

One or more embodiments of the present disclosure provides an electrode for a rechargeable lithium battery including an active material layer including an active material and having a first hole and a second hole, the second hole having a depth greater than a depth of the first hole, wherein a ratio of the depth of the first hole to the depth of the second hole is about 1:2 to about 1:5.

One or more embodiments of the present disclosure provides a rechargeable lithium battery including the electrode.

One or more embodiments of the present disclosure are included in the following detailed description.

A negative electrode for a rechargeable lithium battery according to one or more embodiments may exhibit improved high power and fast charge characteristics.

### BRIEF DESCRIPTION OF DRAWINGS

FIG. 1 is a cross-sectional schematic diagram showing an electrode for a rechargeable lithium battery according to one or more embodiments of the present disclosure.
FIG. 2 is a schematic drawing explaining a gap between holes formed in the negative electrode according to one or more embodiments of the present disclosure.
FIG. 3 a schematic perspective diagram showing a rechargeable lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Unless otherwise noted, like reference numerals denote like elements throughout the attached drawings and the written description, and thus, duplicative descriptions thereof may not be provided. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Spatially relative terms, such as "below," "lower," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "under" other elements or features would then be oriented "above" the other elements or features. Thus, the example terms "below" and "under" can encompass both an orientation of above and below. The device may be otherwise oriented (*e*.*g*., rotated 90 degrees or at other orientations) and the spatially relative descriptors used herein should be interpreted accordingly.

It will be understood that when an element or layer is referred to as being "on" another element or layer, it can be directly on the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

The term "combination thereof" may include a mixture, a laminate, a complex, a copolymer, an alloy, a blend, a reactant of constituents, etc.

It will be further understood that the terms "comprises," "comprising," "includes," "including," "have," and "having" when used in this specification, specify the presence of the stated features, characteristics, integers, steps, operations, elements, and/or components, but do not preclude the presence or addition of one or more other features, characteristics, integers, steps, operations, elements, components, and/or groups thereof.

As used herein, unless explicitly described to the contrary, the word "comprise" and variations such as "comprises" or "comprising" will be understood to imply the inclusion of stated elements but not the exclusion of any other element.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

In the specification, A and/or B indicates A or B or both A and B.

The term "thickness" may be measured through an image taken with an optical microscope, such as a scanning electron microscope, for example.

In the present disclosure, when a definition is not otherwise provided, particle diameter indicates an average particle diameter. An average particle diameter indicates an average particle diameter (D50) where a cumulative volume is about 50 volume% in a particle size distribution. When particles are spherical, "diameter" indicates a particle diameter or an average particle diameter, and when the particles are non-spherical, the "diameter" indicates a long (major) axis length or an average long (major) axis length. The particle size (D50) may be measured by a method generally available to those skilled in the art, for example, by a particle size analyzer, or by a transmission electron microscopic image, a scanning electron microscopic image), or a field emission scanning electron microscopy (FE-SEM). Alternatively, a dynamic light-scattering measurement device may be utilized to perform a data analysis, and the number of particles is counted for each particle size range, and from this, the average particle diameter (D50) value may be easily obtained through a calculation, or a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50 % standard of particle distribution in the measuring device.

An active mass indicates a solid mixture of an active material, a binder, and optionally a conductive material. For example, the active mass indicates an active material layer.

An electrode for a rechargeable lithium battery according to one or more embodiments includes an active material layer where a first hole and a second hole having a longer depth than the depth of the first hole, are formed, wherein a ratio of the depth of the first hole : the depth of the second hole may be about 1:2 to about 1:5.

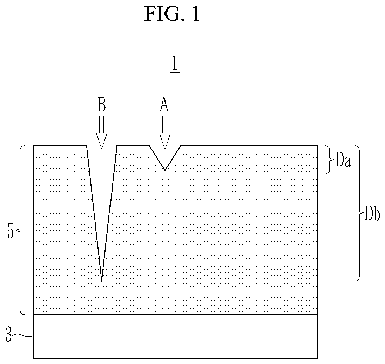

Hereinafter, the electrode for a rechargeable lithium battery according to one or more embodiments will be illustrated, referring to FIG. 1. As shown in FIG. 1, the electrode 1 includes a current collector 3 and an active material layer 5 on the current collector 3. On (in) the active material layer 5, two types (kinds) of holes with different depths are formed. Among these holes, if (e.g., when) a shallow depth hole (A) refers to a first hole, and a deeper hole (B) refers to a second hole, then a ratio of depth of the first hole (Da) : (to) depth of the second hole (Db) may be about 1:2 to about 1:5. In one or more embodiments, a ratio of depth of the first hole : depth of the second hole may also about 1:2.5 to about 1:5, or about 1:3 to about 1:4.5. Herein, (in a thickness direction of the active material layer) a deeper depth indicates that the length from a (top) surface of the active material layer to a bottom surface of the active material layer that is in contact with the current collector is long, and a shallow depth indicates that the length from the top surface of the active material layer to the bottom surface of the active material layer (*e*.*g*., the surface in contact with the current collector) is short. If (*e*.*g*., when) the surface of the active material layer (*e*.*g*., an area of the active material layer directly adjacent to and including the top surface of the active material layer) is defined as an upper portion and the bottom of the active material layer that directly contacts the current collector (*e*.*g*., an area of the active material layer directly adjacent to and including the bottom surface of the active material layer that is in contact with the current collector) is defined as a lower portion, then both the first holes and second holes may be present in the upper and only the second holes may be present in the lower portion.

If the first holes and the second holes have the ratio of depth that falls within the above ranges, then improved electrochemical characteristics may be obtained. The first hole with a shallow depth may increase the reaction surface area, which results in increased or improved absorption of lithium during charge and discharge, thereby reducing lithium deposition generated on the surface of the electrode, increasing density of the active mass, and uniformly preparing the active material layer. The second hole having a deeper depth may improve the electrolyte impregnation ability and lithium ion mobility. As such, the inclusion of two types (kinds) of holes with different depths in the electrode may provide improved electrochemical characteristics resulting from having both the first and second holes. High ion resistance and a decrease in the electrolyte impregnation ability of the first hole may be compensated for by the second hole, and lithium deposition and a decrease in the active mass density of the second hole may be compensated for by the first hole.

If (*e*.*g*., when) the depth ratio of the first holes and the second holes is out of the above ranges, for example, if (*e*.*g*., when) the depth of the second hole : depth of the first hole is less than 2:1, then the shortcomings due to the first hole may not be sufficiently compensated for by the second hole. Thus, ion resistance may be low and the electrolyte impregnation ability may be deteriorated. If (*e*.*g*., when) the depth of the second hole : depth of the first hole is more than 5:1, then the first hole may not be sufficient to compensate for the shortcomings of the second hole, and lithium deposition and a decrease in active mass density may be increased.

In one or more embodiments, the depth of the second hole may be about 30% to about 100%, about 35% to about 100%, or about 50% to about 100% based on 100 % of the thickness of the active material layer. As used herein, depth is expressed as 100 % from the top surface of the active material layer to the bottom surface in contact with the current collector. If (*e*.*g*., when) the depth of the second hole is within the above ranges, then the effects for improving the ability for impregnating electrolyte and lithium ion mobility may be further enhanced.

In one or more embodiments, the depth of the first hole may be about 1 % to about 30%, about 1 % to about 25%, or about 5% to about 25% based on 100 % of the thickness of the active material layer. If (*e*.*g*., when) the depth of the first hole is within the above ranges, then the reaction surface area and active mass density may be further increased.

In one or more embodiments, the first hole or the second hole is formed by extending in the thickness direction from the surface, for example, the outermost surface, of the active material layer, and the first hole or the second hole may have a cone shape, a concave shape, or a blunt-ended cone-shape. A bottom surface of the cone may be oval or circular. The first hole and the second hole may have the same shape or a different shape. In the electrode surface according to one or more embodiments, the first hole may account for about 10 % to about 50 % of the total number of first holes and second holes, or about 20 % to about 50 % of the total number of first holes and second holes. For example, if (*e*.*g*., when) the total number of holes formed on the surface of the electrode is 100 holes, then the first hole may be about 10 holes to about 50 holes. If (*e*.*g*., when) the first holes are formed in the above numbers on the surface of the electrode, then the separation of the active mass may be suppressed or reduced during hole formation by laser punching, and during hole formation by mold processing, such as needle punching, and bulging may be minimized or reduced and a reaction surface area may be further increased.

In the outermost surface (*e*.*g*., the top surface) of the active material layer, the area occupied by the first holes and the second holes may be about 10 % to about 50 %, about 15 % to about 50 %, or about 20% to about 50% based on the total area 100 % of the active material layer. In the outermost surface, if (*e*.*g*., when) the area occupied by the first hole and the second hole is within the above ranges, the lithium ion mobility and area participating in lithium insertion and desorption reaction may be further increased. In one or more embodiments, the area of the hole indicates the area at the outermost surface of the negative active material layer that comes into contact with the separator, for example, an area if (*e*.*g*., when) the surface is viewed in a downward direction from above the surface (*e*.*g*., plan view).

In the outermost surface of the active material layer, an area ratio of the first hole to the second hole per an unit area may be about 1:1 to about 1:10, about 1:1.5 to about 1:8, or about 1:2 to about 1:6. If (*e*.*g*., when) the area ratio of the first hole to the second hole in the outermost surface satisfies the above ranges, then the battery performance may be further improved, while minimizing or reducing the separation or rising of the active mass.

In one or more embodiments, the width (*e*.*g*., diameter) of the first hole may be about 10 µm to about 160 µm, about 13 µm to about 100 µm, or about 15 µm to about 50 µm. The width (*e*.*g*., diameter) of the second hole may be about 10 µm to about 160 µm, about 13 µm to about 100 µm, or about 15 µm to about 50 µm. If (*e*.*g*., when) the widths of the first hole and the second hole are within the above ranges, the effects from forming the first hole and the second hole with the different depths may be obtained. In the present disclosure, when a definition is not otherwise provided, hole diameter indicates an average hole diameter. An average hole diameter indicates an average hole diameter (D50) where a cumulative volume is about 50 volume% in a hole size distribution. When holes are circular, "diameter" indicates a circular diameter or an average circular diameter, and when the holes are non-circular, the "diameter" indicates a long (major) axis length or an average long (major) axis length.

In one or more embodiments, the ratio of the width of the first hole to the width of the second hole may be about 16:1 to about 1:16, about 7.7:1 to about 1:7.7, or about 3.3:1 to about 1: 3.3. If (*e*.*g*., when) the ratio of the width of the first hole to the width of the second hole is within the above ranges, improved effects from forming the first hole and the second hole with the different widths may be obtained.

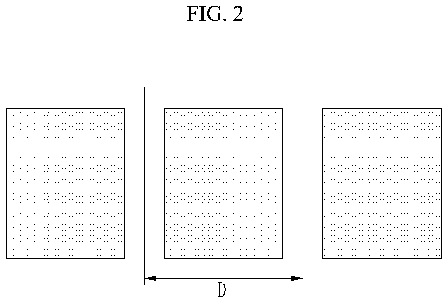

The gap between the first hole and the second hole may be about 30 µm to about 200 µm, about 40 µm to about 150 µm, or about 50 µm to about 100µm. In one or more embodiments, the gap indicates a distance between center points of two adjacent holes, and as shown in FIG. 2, it indicates a distance (D) between the center points of the two neighboring holes. If (*e*.*g*., when) the gap between the first hole and the second hole is within the above ranges, then the lithium ion mobility in the electrode due to the hole structure may be improved.

The first hole and the second hole may be formed randomly, and in some embodiments, may be formed repeatedly. For example, if (*e*.*g*., when) the first hole and the second hole correspond to one hole unit, then the hole unit may be repeatedly formed in the electrode. For example, the holes may be formed in order of a first hole, a second hole, a first hole, a second hole, *etc.*

In one or more embodiments, the electrode may further include a third hole having a shallower (shorter) depth than the first hole. The thickness of the third hole may be about 1 % to about 15 %, about 5 % to about 10 %, or about 6.5 % to about 8.5 % based on 100 % of the thickness of the active material layer. The electrode may further include at least one third hole. If (*e*.*g*., when) the electrode further includes the third hole that is shallower than the first hole, then reaction surface area is increased, thereby further enhancing the effects of receiving lithium during charging and discharging.

If (*e*.*g*., when) the third hole is included, then the first hole, the second hole, and the third hole may be formed randomly, and/or in some embodiments, may be formed repeatedly. For example, if (*e*.*g*., when) the first hole, the second hole, and the third hole correspond to one hole unit, then the hole unit may be formed repeatedly in the electrode, and thus, the first hole, the second hole, the third hole, the first hole, the second hole, the third hole, *etc.*, may be sequentially formed.

The electrode including the holes as described in the embodiments may be a negative electrode, a positive electrode, or both the negative electrode and the positive electrode of a battery. For example, the type or kind of the electrode including the first hole and the second hole according to one or more embodiments may be not limited, and it may be applied to any suitable electrode.

### Negative electrode

The electrode according to one or more embodiments may be a negative electrode.

The negative electrode includes a current collector and a negative active material layer on the current collector. The negative active material layer may include a negative active material, and the negative active material layer may include the first hole and the second hole.

In one or more embodiments, the negative active material may be a carbon-based active material, a Si-based active material, or a combination thereof.

The carbon-based negative active material, for example, may be crystalline carbon, amorphous carbon, or a combination thereof. The crystalline carbon may be graphite such as an unspecified shape, sheet, flake, spherical or fiber shaped natural graphite or artificial graphite, and the amorphous carbon may be soft carbon, hard carbon, mesophase pitch carbide, sintered cokes, and/or the like.

The Si-based negative active material may be silicon, a Si-C composite, SiOₓ (0<x<2), a Si-Q alloy (wherein Q is an element of (*e*.*g*., an element selected from among) an alkali metal, an alkaline-earth metal, a Group 13 element, a Group 14 element, a Group 15 element, a Group 16 element, a transition metal, a rare earth element, and/or a combination thereof, and not Si, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof), or a combination thereof.

The Si-C composite may include a silicon-based material and an amorphous carbon coated on the surface of the silicon-based material. For example, the Si-C composite may include secondary particles (e.g., each of) where silicon primary particles are agglomerated, and an amorphous carbon coating layer on the surface of (e.g., each of) the secondary particles. The amorphous carbon may (e.g., also) be positioned between the silicon primary particles, for example, so that the silicon primary particles may (e.g., also) be coated with the amorphous carbon. The silicon-carbon composite may also include a core in which silicon particles are distributed in an amorphous carbon matrix and having an amorphous carbon coating layer coated on a surface of the core.

A secondary particle may be positioned at the center of the Si-C composite in a form of particles, which may be referred to as a core or a center part of a particle of the Si-C composite. The amorphous carbon coating layer may be referred to as an outer part or a shell.

If (*e*.*g*., when) the silicon-carbon composite includes silicon and amorphous carbon, a mixing ratio of silicon and amorphous carbon may be about 20:80 to about 30:70 by weight.

The silicon particles (e.g., silicon primary particles) may be nano silicon particles (in nanometer scale). The nano silicon particles may have a particle diameter (*e*.*g*., average particle diameter) of about 10 nm to about 1,000 nm, or according to one or more embodiments, may be about 20 nm to about 900 nm, about 20 nm to about 800 nm, about 20 nm to about 500 nm, about 20 nm to about 300 nm, or about 20 nm to about 150 nm. If (*e*.*g*., when) the average particle diameter of the silicon particles is within the above ranges, then the extreme volume expansion caused during charge and discharge may be suppressed or reduced, and a breakage of the conductive path due to crushing of particles may be prevented or reduced.

The amorphous carbon may be soft carbon, hard carbon, mesophase pitch carbide, sintered cokes, or a combination thereof.

In one or more embodiments, the secondary particles or the core may further include crystalline carbon. If (*e*.*g*., when) the Si-C composite further includes crystalline carbon, then the Si-C composite includes secondary particles where the silicon primary particles and crystalline carbon are agglomerated and an amorphous carbon coating layer formed on the surface of (e.g., each of) the secondary particles.

The crystalline carbon may be an unspecified shaped, sheet, flake, spherical, or fiber shaped natural graphite or artificial graphite.

The silicon-carbon (*e*.*g*., Si-C) composite may be a composite of silicon and amorphous carbon. The silicon-carbon composite particle may have an average particle diameter (D50) of, for example, about 0.5 µm to about 20 µm. According to one or more embodiments, the silicon-carbon composite may include silicon particles and an amorphous carbon coated on the surface of the silicon particles. For example, it may include secondary particles (core), e.g., each of, where the silicon primary particles are agglomerated and an amorphous carbon coating layer (shell) on the surface of (e.g., each of) the secondary particles. The amorphous carbon may be positioned between the silicon primary particles, for example, so that the silicon primary particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be artificial graphite, natural graphite, or a combination thereof. The amorphous carbon may be soft carbon, hard carbon, mesophase pitch carbide, sintered cokes, and/or the like.

If (*e*.*g*., when) the silicon-carbon composite includes silicon and amorphous carbon, then an amount of silicon may be about 10 wt% to about 50 wt% based on 100 wt% of the silicon-carbon composite and an amount of the amorphous carbon may be about 50 wt% to about 90 wt%. If (*e*.*g*., when) the composite includes silicon, amorphous carbon, and crystalline carbon, based on 100 wt% of the silicon-carbon composite, then an amount of silicon may be about 10 wt% to about 50 wt%, an amount of the crystalline carbon may be about 10 wt% to about 70 wt%, and an amount of the amorphous carbon may be about 20 wt% to about 40 wt%.

The amorphous carbon coating layer may have a thickness of about 5 nm to about 100 nm. An average particle diameter (D50) of the silicon particle (primary particle) may be about 10 nm to about 1 µm, or about 10 nm to about 200 nm. The silicon particles may be presented in silicon itself, a silicon alloy, or an oxidized form of silicon. The oxidized silicon may be represented by SiOₓ (0<x<2). An atomic mole ratio of Si:O representing a degree of oxidation may be about 99:1 to about 33:67. As used herein, an average particle diameter D50 refers to the average diameter (or size) of particles whose cumulative volume corresponds to 50 vol% in the particle size distribution (*e*.*g*., cumulative distribution), and refers to the value of the particle size corresponding to 50% from the smallest particle when the total number of particles is 100% in the distribution curve accumulated in the order of the smallest particle size to the largest particle size.

If (*e*.*g*., when) the carbon-based active material and the Si-based active material are used together, then a mixing ratio of the carbon-based active material to the Si-based active material may be a weight ratio of about 1:99 to about 90:10.

In one or more embodiments, the negative active material layer further includes a binder, and may optionally further include a conductive material. In the negative active material layer, an amount of the binder may be about 1 wt% to about 5 wt% based on the total weight of the negative active material layer. In case of further including the conductive material, the negative active material may be included at an amount of about 90 wt% to about 98 wt%, the binder may be included at an amount of about 1 wt% to about 5 wt%, and the conductive material may be included at an amount of about 1 wt% to about 5 wt%.

The binder improves binding properties of negative active material particles with one another and with a current collector. The binder may be a non-aqueous binder, an aqueous binder, or combination thereof.

The non-aqueous binder may be an ethylene propylene copolymer, polyacrylonitrile, polystyrene, polyvinyl chloride, carboxylated polyvinylchloride, polyvinyl fluoride, polyurethane, polytetrafluoroethylene, polyvinylidene fluoride, polyethylene, polypropylene, polyamide imide, polyimides, or any suitable combination thereof.

The aqueous binder may be a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or any suitable combination thereof.

The aqueous binder may include a cellulose-based compound. The cellulose-based compound may be utilized alone or mixed with the aqueous binder. The cellulose-based compound may include one or more of carboxymethyl cellulose, hydroxypropyl methyl cellulose, methyl cellulose, or alkali metal salts thereof. The alkali metal may be Na, K, or Li. The cellulose-based compound may impart viscosity and may be referred to as a thickener, and may serve as a binder and may be referred to as a binder. An amount of the cellulose-based compound may be appropriately adjusted and is not limited, but, for example, the utilized amount of the cellulose-based compound may be about 0.1 parts by weight to about 3 parts by weight based on 100 parts by weight of the negative active material.

The conductive material is included to provide electrode conductivity, and any suitable electrically conductive material may be utilized as a conductive material unless it causes a chemical change. Examples of the conductive material include a carbon-based material such as natural graphite, artificial graphite, carbon black, acetylene black, ketjen black, a carbon fiber, and/or the like; a metal-based material of a metal powder or a metal fiber including copper, nickel, aluminum, silver, and/or the like; a conductive polymer such as a polyphenylene derivative; or any suitable mixture thereof.

The current collector may include one of (*e*.*g*., selected from among) a copper foil, a nickel foil, a stainless steel foil, a titanium foil, a nickel foam, a copper foam, a polymer substrate coated with a conductive metal, and/or any suitable combination thereof, but the present disclosure is not limited thereto.

The negative electrode according to one or more embodiments may be produced by preparing a negative active material layer on the current collector and forming the first holes and the second holes. The hole formation process may be any techniques, as long as it may form holes, and for example, it may be needle punching, a laser punching, and/or the like. The needle punching may form holes by pressing an electrode utilizing a single mold with protrusions of two different heights, or by processing twice utilizing two molds with protrusions of different heights. In case of the laser punching, two holes with different depths from each other may be formed by adjusting the irradiation time, the number of irradiations, or the irradiation energy. The condition for the irradiation time, the number of irradiations, or the irradiation energy may be suitably adjusted within sufficient conditions to form holes with the different depths. For example, the second hole may be formed deeper than the first hole by taking a longer irradiation time. In one or more embodiments, the second hole may be formed deeper by increasing the number of irradiations compared to the first hole, or the irradiation energy may be adjusted to be larger for forming the second holes than the first hole. The irradiation may be carried out utilizing wavelengths in the infrared region, the visible ray region, or the ultraviolet (UV) region.

The numbers of holes may be appropriately adjusted according to the conditions.

The negative active material layer preparation may be performed by a generally available technique including coating a negative active material layer composition including a negative active material, a binder, optionally, a conductive material, and a solvent on a current collector, and drying and pressurizing. The solvent may be N-methyl pyrrolidone, water, or a combination thereof, and when the binder utilized is an aqueous binder, water may be utilized as the solvent.

### Positive electrode

The positive electrode may include a positive current collector and a positive active material layer formed on the positive current collector. The positive active material layer may include a positive active material and may be a positive active material layer where the first holes and the second holes are formed.

The positive active material may include lithiated intercalation compounds that reversibly intercalate and deintercalate lithium ions. In one or more embodiments, one or more composite oxides of a metal of (*e*.*g*., selected from among) cobalt, manganese, nickel, and/or a combination thereof, and lithium may be utilized. In one or more embodiments, the compounds represented by one of the following chemical formulae may be utilized: LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂, QS₂, LiQS₂, V₂O₅, LiV₂O₅, LiZO₂, LiNiVO₄, Li _{(3-f)}J₂(PO₄)₃ (0≤f≤2); Li _{(3-f)}Fe₂(PO₄)₃ (0≤f≤2); and/or LiₐFePO₄ (0.90≤a≤1.8).

In the above chemical formulas, A is (*e*.*g*., is selected from among) Ni, Co, Mn, and/or any suitable combination thereof; X is (*e*.*g*., is selected from among) Al, Ni, Co, Mn, Cr, Fe, Mg, Sr, V, a rare earth element, and/or any suitable combination thereof; D' is (*e*.*g*., is selected from among) O, F, S, P, and/or any suitable combination thereof; E is (*e*.*g*., is selected from among) Co, Mn, and/or any suitable combination thereof; T is (*e*.*g*., is selected from among) F, S, P, and/or any suitable combination thereof; G is (*e*.*g*., is selected from among) Al, Cr, Mn, Fe, Mg, La, Ce, Sr, V, and/or any suitable combination thereof; Q is (*e*.*g*., is selected from among) Ti, Mo, Mn, and/or any suitable combination thereof; Z is (*e*.*g*., is selected from among) Cr, V, Fe, Sc, Y, and/or any suitable combination thereof; J is (*e*.*g*., is selected from among) V, Cr, Mn, Co, Ni, Cu, and/or any suitable combination thereof; and L¹ is (*e*.*g*., is selected from among) Mn, Al, and/or any suitable combination thereof.

The compounds may have a coating layer on the surface, or may be mixed with another compound having a coating layer. The coating layer may include at least one coating element compound of (*e*.*g*., selected from among) an oxide of a coating element, a hydroxide of a coating element, an oxyhydroxide of a coating element, an oxycarbonate of a coating element, and/or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or any suitable mixture thereof. The coating layer may be disposed in a method having no adverse influence on properties of a positive active material by utilizing these elements in the compound. For example, the method may include any coating method such as spray coating, dipping, and/or the like. The methods may not be described further herein as they are generally available in the related field.

In the positive electrode, an amount of the positive active material may be about 90 wt% to about 98 wt% based on the total weight of the positive active material layer.

In one or more embodiments, the positive active material layer may further include a binder and a conductive material. The binder and the conductive material may be included in an amount of about 1 wt% to about 5 wt%, respectively based on the total weight of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but the present disclosure is not limited thereto.

The conductive material may be included to provide electrode conductivity. Any suitable electrically conductive material may be utilized as a conductive material unless it causes a chemical change. Examples of the conductive material may include a carbon-based material such as natural graphite, artificial graphite, carbon black, acetylene black, ketjen black, carbon fiber, and/or the like; a metal-based material of a metal powder or a metal fiber including copper, nickel, aluminum, silver, and/or the like; a conductive polymer such as polyphenylene derivatives; or any suitable mixture thereof.

The current collector may be Al, but the present disclosure is not limited thereto.

The positive electrode may be prepared by mixing an active material, a binder, and a conductive material in a solvent to prepare an active material composition and coating the active material composition on a current collector. Such a positive preparation is generally available in the related art may not be described in more detail herein. The solvent may be N-methyl pyrrolidone, but the present disclosure is not limited thereto.

### Rechargeable lithium battery

A rechargeable lithium battery according to one or more embodiments includes a positive electrode, a negative electrode, and a non-aqueous electrolyte. Either the positive electrode or the negative electrode, or both positive electrode and the negative electrode may be an electrode in which the first holes and the second holes are formed.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like, and the ester-based solvent may include methyl acetate, ethyl acetate, n-propyl acetate, dimethyl acetate, methyl propionate, ethyl propionate, propyl propionate, decanolide, mevalonolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like, and the ketone-based solvent may include cyclohexanone, and/or the like. The alcohol-based solvent may include ethyl alcohol, isopropyl alcohol, and/or the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, 1,4-dioxolane, and/or the like, sulfolanes, and/or the like.

The organic solvent may be utilized alone or in a mixture. If (*e*.*g*., when) the organic solvent is utilized in a mixture, the mixture ratio may be controlled or selected in accordance with a desirable battery performance and it may be generally available / generally utilized by one in the related art.

If (*e*.*g*., when) the non-aqueous organic solvent is mixed and utilized, then a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be utilized. The propionate-based solvent may be methyl propionate, ethyl propionate, propyl propionate, or any suitable combination thereof.

Herein, if (e.g., when) the cyclic carbonate and the chain carbonate or the cyclic carbonate and the propionate-based solvent are mixed, then they may be mixed in a volume ratio of about 1:1 to about 1:9 and thus performance of an electrolyte solution may be improved. In one or more embodiments, if (*e*.*g*., when) the cyclic carbonate, the chain carbonate and the propionate-based solvent are mixed, they may be mixed in a volume ratio of about 1:1:1 to about 3:3:4. The mixing ratios of the solvents may be appropriately adjusted according to desirable properties.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based solvent may be an aromatic hydrocarbon-based compound represented by Chemical Formula 1.

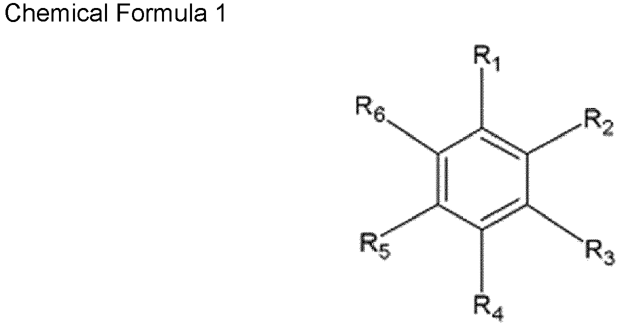

In Chemical Formula 1, R₁ to R₆ may each independently be the same or different and are (*e*.*g*., are selected from among) hydrogen, a halogen, a C1 to C10 alkyl group, a haloalkyl group, and/or any suitable combination thereof.

Specific examples of the aromatic hydrocarbon-based solvent may be (*e*.*g*., may be selected from among) benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and/or any suitable combination thereof.

The electrolyte may further include vinyl ethyl carbonate, vinylene carbonate or an ethylene carbonate-based compound represented by Chemical Formula 2, as an additive for improving cycle life.

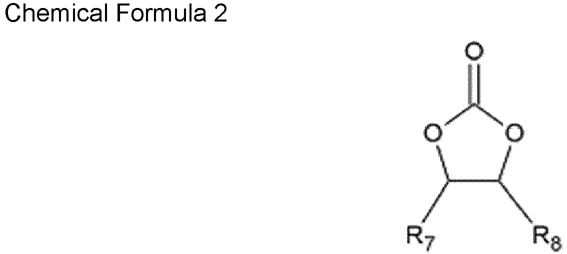

In Chemical Formula 2, R₇ and R₈ may each independently be the same or different and may each independently be hydrogen, a halogen, a cyano group (CN), a nitro group (NO₂), or a C1 to C5 fluoroalkyl group, provided that at least one of R₇ and/or R₈ is a halogen, a cyano group (CN), a nitro group (NO₂), or a C1 to C5 fluoroalkyl group, and R₇ and R₈ are not concurrently (e.g., simultaneously) hydrogen.

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. In case of further utilizing the additive for improving cycle life, an amount of the additive may be suitably controlled or selected within an appropriate or suitable range.

The lithium salt dissolved in an organic solvent supplies a battery with lithium ions, basically operates the rechargeable lithium battery, and improves transportation of the lithium ions between positive and negative electrodes. Examples of the lithium salt include at least one or two supporting salts of (*e*.*g*.*,* selected from among) LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlClₐ, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxolato) phosphate), LiCl, Lil, LiB(C₂O₄)₂ (lithium bis(oxalato) borate: LiBOB), and/or lithium difluoro(oxalato)borate(LiDFOB). A concentration of the lithium salt may range from about 0.1 M to about 2.0 M. If (*e*.*g*., when) the lithium salt is included at the above concentration ranges, then an electrolyte may have excellent or suitable performance and lithium ion mobility due to optimal or suitable electrolyte conductivity and viscosity.

A separator may be disposed between the positive electrode and the negative electrode depending on a type or kind of a rechargeable lithium battery. The separator may utilize polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a ceramic-included coating layer positioned on at least one surface of the porous substrate.

The coating layer may ceramic. The ceramic may include SiO₂, Al₂O₃, Al (OH)₃, AlO(OH), TiO₂, BaTiO₂, ZnO₂, Mg (OH)₂, MgO, Ti (OH)₄, ZrO₂, aluminum nitride, silicon carbide, boron nitride, or any suitable combination thereof.

The coating layer may also be a functional layer capable of adding additional functions. The functional layer, for example, may be at least one of a heat-resistance layer and/or an adhesive layer. The heat-resistance layer may include a heat-resistance resin and optionally a filler. In one or more embodiments, the adhesive layer may include an adhesive resin and optionally a filler. The filler may be an organic filler, an inorganic filler, or any suitable combination thereof. The heat-resistance resin and the adhesive resin may be any materials which may be utilized in separators of the related art.

The rechargeable lithium battery may be classified as a lithium ion battery, a lithium ion polymer battery, or a lithium polymer battery depending on the types (kinds) of the separator and the electrolyte, may be classified into cylindrical, prismatic, coin-type or kind, or pouch-type or kind depending on the shape, and may be classified into a bulk type or kind or a thin film type or kind depending on a size. The structure and fabrication of such batteries are generally available in the related arts, and thus, may not be described in further detail herein.

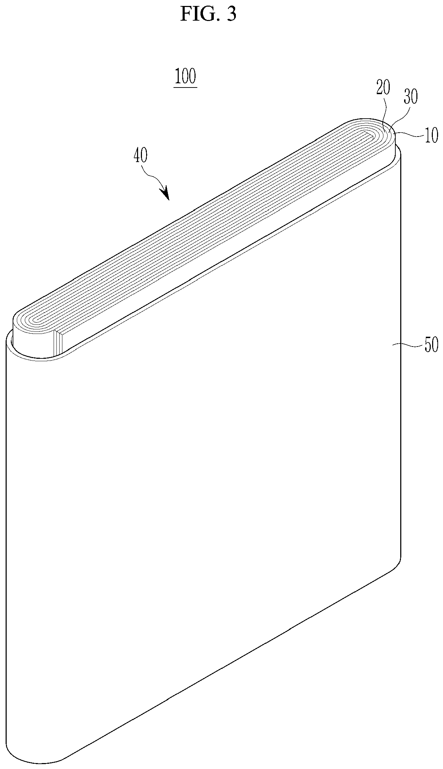

FIG. 3 is an exploded perspective view of a rechargeable lithium battery according to one or more embodiments of the present disclosure. The rechargeable lithium battery according to one or more embodiments is illustrated as a prismatic battery, but the present disclosure is not limited thereto and may include variously-shaped batteries such as a cylindrical battery, a pouch battery, and/or the like.

Referring to FIG. 3, a rechargeable lithium battery 100 according to one or more embodiments may include an electrode assembly 40, manufactured by winding a separator 30 disposed between a positive electrode 10 and a negative electrode 20, and a case 50 housing the electrode assembly 40. An electrolyte may be impregnated in the positive electrode 10, the negative electrode 20, and the separator 30.

Hereinafter, examples of the present disclosure and comparative examples are described. These examples, however, are not in any sense to be interpreted as limiting the scope of the present disclosure.

### Example 1

An ethanol solvent and silicon particles with a particle diameter of several micrometers were mixed at a weight ratio of 8.5:1.5 to prepare a silicon nano dispersed liquid by utilizing a beads mill (Netzsch, Germany).

The silicon nano dispersed liquid was mixed with natural graphite at a weight ratio of 8.8 : 1.2, and then the resulting mixed liquid was spray-dried at 180 °C utilizing a spray drier to prepare a Si precursor.

The Si precursor and meso-pitch carbon were mixed at a 10:90 by weight ratio, and the mixture was heat-treated at 900 °C under an N₂ atmosphere for 2 hours to prepare a silicon-carbon composite. The silicon-carbon composite included an agglomerated product, which was secondary particles where nano silicon particles were agglomerated, and a soft carbon coating layer on the surface of the agglomerated product. Herein, based on the total 100 wt% of the silicon-carbon composite, an amount of nano silicon particles was 8.8 wt%, an amount of the soft carbon amorphous carbon was 90 wt%, and an amount of the natural graphite was 1.2 wt%. A thickness of the soft carbon coating layer was 2 nm.

11 wt% of the prepared silicon-carbon composite negative active material, 44 wt% of graphite (a mixture of artificial graphite and natural graphite=50:50 weight ratio), 20 wt% of carboxymethyl cellulose, and 25 wt% of a styrene-butadiene rubber were mixed in a water solvent to prepare a negative active material layer slurry.

The negative active material layer slurry was coated on a Cu foil current collector and dried followed by pressurizing to prepare a negative electrode in which a negative active material layer was formed on the current collector. In the prepared negative electrode, the thickness of the negative active material layer was 100 µm.

The negative active material layer was subjected to laser hole processing utilizing an IR (Infrared) wavelength laser to prepare first holes and second holes of a cone shape (with a circular bottom surface) in the negative active material layer, thereby preparing a negative electrode. The laser hole processing was carried out by irradiating for twice the amount of time during the second hole preparation compared to the first hole preparation. In the negative electrode, the depth of the first hole was 25 % and the depth of the second hole was 50 % based on 100 % of the thickness of the active material layer. The number of the first holes accounted for 50 % based on 100 % of the total number of the first holes and the second holes. The area occupied by the first holes and the second holes on the outermost surface of the active material layer was 30 % based on the total area of 100 % of the active material layer and the area ratio of the first holes to the second holes per unit area on the outermost surface of the active material layer was 1:1. A width (*e*.*g*.*,* average width or average diameter) of the first hole was 31 µm, a width (*e*.*g*.*,* average width or average diameter) of the second hole also was 31 µm, and a gap (*e*.*g*.*,* average gap) between the first hole and the second hole was 50 µm.

The negative electrodes and an electrolyte were utilized to fabricate a symmetric cell. The electrolyte was prepared by dissolving 1 M LiPF₆ in ethylene carbonate and dimethyl carbonate (3:7 volume ratio).

### Example 2

A negative electrode and a symmetric cell were fabricated by substantially the same procedure as in Example 1, except that a laser hole processing was subjected to a negative active material layer by irradiating an IR wavelength laser for 4 times longer for the second hole preparation than for the first hole preparation, to prepare first holes corresponding to 25 % depth and second holes corresponding to 100 % depth based on 100 % of the thickness of the active material layer. The number of the first holes accounted for 50 % based on 100 % of the total number of the first holes and the second holes. The area occupied by the first holes and the second holes on the outermost surface of the active material layer was 30 % based on the total area of 100 % of the active material layer and the area ratio of the first holes to the second holes per unit area on the outermost surface of the active material was 1:1. A width (*e*.*g*., average width or average diameter) of the first hole was 31 µm, a width (*e*.*g*., average width or average diameter) of the second hole also was 31 µm, and a gap (*e*.*g*., average gap) between the first hole and the second hole was 50 µm.

### Example 3

A negative electrode and a symmetric cell were fabricated by substantially the same procedure as in Example 1, except that a negative active material layer was subjected to a laser hole processing utilizing an infrared (IR) wavelength laser to prepare first holes corresponding to 25 % depth and second holes corresponding to 50 % depth based on 100 % of the thickness of the active material layer until the number of the first holes corresponded to 30 % of the total numbers of the first holes and the second holes. The laser hole processing was carried out by irradiating for two times longer for the second hole preparation as compared to the first hole preparation. The area occupied by the first holes and the second holes on the outermost surface of the active material layer was 30 % based on the total area of 100 % of the active material layer, and the area ratio of the first holes to the second holes per unit area on the outermost surface of the active material was 3 : 7. A width (*e*.*g*., average width or average diameter) of the first hole was 31 µm, a width (*e*.*g*., average width or average diameter) of the second hole also was 31 µm, and a gap (*e*.*g*., average gap) between the first hole and the second hole was 50 µm.

### Example 4

A negative electrode and a symmetric cell were fabricated by substantially the same procedure as in Example 3, except that a negative active material layer was subjected to a laser hole processing by irradiating an IR frequency laser for 4 times longer for the second hole preparation as compared to the first hole preparation, to prepare first holes corresponding to 25 % depth and second holes corresponding to 100 % depth based on 100 % of the thickness of the active material layer. The number of the first holes accounted for 30 % based on 100 % of the total number of the first holes and the second holes. The area occupied by the first holes and the second holes on the outermost surface of the active material layer was 30 % based on the total area of 100 % of the active material layer and the area ratio of the first holes to the second holes per unit area on the outermost surface of the active material was 3:7. A width (*e*.*g*., average width or average diameter) of the first hole was 31 µm, a width (*e*.*g*., average width or average diameter) of the second hole also was 31 µm, and a gap (*e*.*g*., average gap) between the first hole and the second hole was 50 µm.

### Comparative Example 1

A negative electrode and a symmetric cell were fabricated by substantially the same procedure as in Example 1, except that a negative active material layer was subjected to a laser hole processing utilizing an IR frequency laser to prepare only first holes corresponding to 25 % depth based on 100 % of the thickness of the active material layer. The area occupied by the first holes was 30 % based on the total area of 100 % of the active material layer, a width (*e*.*g*., average width or average diameter) of the first hole was 31 µm and a gap (*e*.*g*., average gap) between the first hole and the adjacent first hole was 50 µm.

### Comparative Example 2

A negative electrode and a symmetric cell were fabricated by substantially the same procedure as in Example 1, except that a negative active material layer was subjected to a laser hole processing utilizing an IR frequency laser to prepare only first holes corresponding to 4 % depth based on 100 % of the thickness of the active material layer. The area occupied by the first holes from the top (outermost) surface of the active material was 30 % based on the total area of 100 % of the active material layer, a width (*e*.*g*., average width or average diameter) of the first hole was 31 µm, and a gap (*e*.*g*., average gap) between the first hole and the adjacent first hole was 50 µm.

### Comparative Example 3

A negative electrode and a symmetric cell were fabricated by substantially the same procedure as in Example 1, except that a negative active material layer was subjected to a laser hole processing utilizing an IR frequency laser to prepare only first holes corresponding to 90 % depth based on 100 % of the thickness of the active material layer. The area occupied by the first holes was 30 % based on the total area of 100 % of the active material layer, a width (*e*.*g*., average width or average diameter) of the first hole was 31 µm, and a gap (*e*.*g*., average gap) between the first hole and the adjacent first hole was 50 µm.

### Comparative Example 4

A negative electrode and a symmetric cell were fabricated by substantially the same procedure as in Example 1, except that a negative active material layer was subjected to a laser hole processing by irradiating an IR frequency laser for 1.6 times longer for the second hole preparation as compared to the first hole preparation, the first holes corresponding to 25 % depth and second holes corresponding to 40 % depth based on 100 % of the thickness of the active material layer. The number of the first holes was 50 % based on 100 % of the total numbers of the first holes and the second holes. The area occupied by the first holes and the second holes on the outermost surface of the active material layer was 30 % based on the total area of 100 % of the active material layer and the area ratio of the first holes to the second holes per unit area on the outermost surface of the active material was 1:1. A width (*e*.*g*., average width or average diameter) of the first hole was 31 µm, a width (*e*.*g*., average width or average diameter) of the second hole also was 31 µm, and a gap (*e*.*g*., average gap) between the first hole and the second hole was 50 µm.

### Comparative Example 5

A negative electrode and a symmetric cell were fabricated by substantially the same procedure as in Example 1, except that a negative active material layer was subjected to a laser hole processing by irradiating an IR frequency laser for 7.6 times longer for the second hole preparation as compared to the first hole preparation, the first holes corresponding to 3 % depth and second holes corresponding to 23 % depth based on 100 % of the thickness of the active material layer. The number of the first holes was 50 % based on 100 % of the total numbers of the first holes and the second holes. The area occupied by the first holes and the second holes on the outermost surface of the active material layer was 30 % based on the total area of 100 % of the active material layer and the area ratio of the first holes to the second holes per unit area on the outermost surface of the active material was 1:1. A width (*e*.*g*., average width or average diameter) of the first hole was 31 µm, a width (*e*.*g*., average width or average diameter) of the second hole also was 31 µm, and a gap (*e*.*g*., average gap) between the first hole and the second hole was 50 µm.

### Comparative Example 6

A negative electrode and a symmetric cell were fabricated by substantially the same procedure as in Example 1, except that a negative active material layer was subjected to a laser hole processing by irradiating an IR frequency laser for 1.4 times longer for the second hole preparation as compared to the first hole preparation, the first holes corresponding to 50 % depth and second holes corresponding to 70 % depth based on 100 % of the thickness of the active material layer. The number of the first holes was 50 % based on 100 % of the total numbers of the first holes and the second holes. The area occupied by the first holes and the second holes on the outermost surface of the active material layer was 30 % based on the total area of 100 % of the active material layer and the area ratio of the first holes to the second holes per unit area on the outermost surface of the negative active material was 1:1. A width (*e*.*g*.*,* average width or average diameter) of the first hole was 31 µm, a width (*e*.*g*.*,* average width or average diameter) of the second hole also was 31 µm, and a gap (*e*.*g.,* average gap) between the first hole and the second hole was 50 µm.

### Experimental Example 1) Evaluation of ionic resistance

For the symmetric cells of Examples 1 to 4 and Comparative Examples 1 to 6, ionic resistance (Rion) was measured by utilizing an impedance analyzer (Solartron 1260A Impedance/Gain-Phase Analyzer) at 25°C under a 2-probe method.

The measured ionic resistance results are shown in Table 1.

### Experimental Example 2) Measurements of impregnation ability of electrolyte

Electrolytes were dropped onto the negative electrodes of Examples 1 to 4 and Comparative Examples 1 to 6 to determine impregnation time. The results are shown in Table 1.

### Experimental Example 3) Measurement of Reduction of Active mass

In (each of) Examples 1 to 4 and Comparative Examples 1 to 6, an amount of the negative active material layer before a laser processing and the amount of the negative active material layer after a laser processing were respectively measured.

From the resulting amounts, the amount of reduction (wt%) in the negative active material layer after a laser processing was calculated. The results are shown in Table 1.

**Table 1**

| | Ratio of depth of first hole:depth of second hole | Ionic resistance (Ω/cm²) | Electrolyte impregnation time (s) | Active mass reduced amount (wt%) |
|---|---|---|---|---|
| Example 1 | 1:2 | 17.992 | 33 | 3.01% |
| Example 2 | 1:4 | 16.098 | 29 | 4.53% |
| Example 3 | 1:2 | 17.108 | 32 | 3.95% |
| Example 4 | 1:4 | 15.31 | 26 | 5.10% |
| Comparative Example 1 | 1:0 | 19.405 | 42 | 2.03% |
| Comparative Example 2 | 1:0 | 22.132 | 49 | 0.2% |
| Comparative Example 3 | 1:0 | 13.712 | 20 | 10.32% |
| Comparative Example 4 | 1:1.6 | 18.259 | 37 | 2.7% |
| Comparative Example 5 | 1:7.6 | 20.203 | 44 | 1.31% |
| Comparative Example 6 | 1:1.4 | 14.753 | 22 | 8.35% |

As shown in Table 1, the negative electrodes of Examples 1 to 4 exhibited relatively low ionic resistances and relatively short electrolyte impregnation times. Because the active mass reduction amount was small in Examples 1 to 4, it may be predicted that the decrease in capacity due to the formation of hole processing is small.

Whereas, among Comparative Examples 1 to 3, each of which formed holes all having substantially the same depth (*e*.*g*., they each formed first holes but not second holes of a different depth), Comparative Examples 1 and 2, which formed holes having a shallow hole depth, exhibited low active mass reduction amounts, but high ionic resistance and long electrolyte impregnation times. Comparative Example 3 having severe deeply holes exhibited relatively low ionic resistance and relatively short electrolyte impregnation time, but had an extremely large active mass reduction amount which may cause a large reduction in capacity. Comparative Example 3, by exhibiting extremely reduced capacity, may undesirably generate precipitation.

Comparative Examples 4 to 6 had first holes and second holes that had different depths, but a depth ratio was out of the range of about 1:2 to about 1:5. Comparative Examples 4 and 5 exhibited relatively high ionic resistance and relatively long electrolyte impregnation times, and Comparative Example 6 exhibited relatively large active mass reduction amount.

The portable device, vehicle, and/or the battery, e.g., a battery controller, and/or any other relevant devices or components according to embodiments of the present disclosure described herein may be implemented utilizing any suitable hardware, firmware (*e*.*g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. An electrode (1) for a rechargeable lithium battery, the electrode (1) comprising:
an active material layer (5) comprising an active material and having a first hole and a second hole, the second hole having a depth greater than a depth of the first hole,
wherein a ratio of the depth of the first hole to (:) the depth of the second hole is about 1 : 2 to about 1 : 5.

2. The electrode (1) as claimed in claim 1, wherein the depth of the second hole is about 50 % to about 100 % based on about 100 % of a thickness of the active material layer (5).

3. The electrode (1) as claimed in claim 1 or 2, wherein the depth of the first hole is about 1 % to about 25 % based on about 100 % of a thickness of the active material layer (5).

4. The electrode (1) as claimed in any one of claims 1 to 3, wherein the first hole or the second hole extends from a surface of the negative active material layer (5) in a thickness direction of the electrode (1).

5. The electrode (1) as claimed in any one of claims 1 to 4, wherein a plurality of first holes comprise the first hole, a plurality of second holes comprise a second hole, and the number of first holes is about 10 % to about 50% based on the total number of the first holes and the second holes.

6. The electrode (1) as claimed in any one of claims 1 to 5, wherein a plurality of first holes comprise the first hole, a plurality of second holes comprise the second hole, and, in an outermost surface of the active material layer (5), an area defining the first holes and the second holes is about 10 % to about 50 % relative to a total area of about 100% of the negative active material layer (5).

7. The electrode (1) as claimed in any one of claims 1 to 6, wherein a ratio of an area of the first hole to an area of the second hole is about 1 : 1 to about 1 : 10 per a unit area in an outermost surface of the active material layer (5).

8. The electrode (1) as claimed in any one of claims 1 to 7, wherein a gap between the first hole and the second hole is about 30 µm to about 200 µm.

9. The electrode (1) as claimed in any one of claims 1 to 8, wherein the first hole has a width of about 10 µm to about 160 µm.

10. The electrode (1) as claimed in any one of claims 1 to 9, wherein the second hole has a width of about 10 µm to about 160 µm.

11. The electrode (1) as claimed in any one of claims 1 to 10, wherein a ratio of a width of the first hole to a width of the second hole is about 16 : 1 to about 1:16.

12. The electrode (1) as claimed in any one of claims 1 to 11, wherein the electrode (1) comprises a third hole having a shallower depth than the first hole.

13. The electrode (1) as claimed in any one of claims 1 to 12, wherein a plurality of first holes comprise the first hole, a plurality of second holes comprise the second hole and a hole unit comprising at least one of the first holes and at least one of the second holes is repeatedly arranged in an outermost surface of the active material layer (5).

14. The electrode (1) as claimed in any one of claims 1 to 13, wherein the electrode (1) is a negative electrode (20) or a positive electrode (10) or wherein each of the negative electrode (20) and the positive electrode (10) is the electrode (1).

15. A rechargeable lithium battery, comprising:
the electrode (1) of any one of claim 1 to claim 14.
